(19) **Europäisches Patentamt / European Patent Office / Office européen des brevets**

(11) **EP 2 676 049 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(51) Int Cl.:
*F16H 49/00* (2006.01)  *F16C 33/40* (2006.01)
*F16C 33/41* (2006.01)  *F16C 33/49* (2006.01)
*F16C 19/08* (2006.01)

(21) Anmeldenummer: **11791574.4**

(22) Anmeldetag: **07.12.2011**

(86) Internationale Anmeldenummer:
**PCT/EP2011/072078**

(87) Internationale Veröffentlichungsnummer:
**WO 2012/110132 (23.08.2012 Gazette 2012/34)**

(54) **WELLGETRIEBE MIT STEIFIGKEITSOPTIMIERTEM WELLGENERATOR**

HARMONIC DRIVE WITH STIFFNESS-OPTIMIZED WAVE GENERATOR

RÉDUCTEUR HARMONIQUE À GÉNÉRATEUR D'ONDE PRÉSENTANT UNE RIGIDITÉ OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2011 DE 102011004074**

(43) Veröffentlichungstag der Anmeldung:
**25.12.2013 Patentblatt 2013/52**

(73) Patentinhaber: **Schaeffler Technologies AG & Co. KG**
**91074 Herzogenaurach (DE)**

(72) Erfinder:
• SCHÄFER, Jens
  **91074 Herzogenaurach (DE)**
• KOHRS, Mike
  **91097 Oberreichenbach (DE)**
• BALKO, Jeffrey S.
  **91074 Herzogenaurach (DE)**

(56) Entgegenhaltungen:
**EP-A1- 0 161 368     EP-A1- 2 184 514**
**WO-A1-95/00748     WO-A1-98/08008**
**DE-B- 1 167 147     JP-U- H01 119 959**
**US-A- 3 001 840**

**Beschreibung**

Die Erfindung betrifft ein Wellgetriebe gemäß dem Oberbegriff des beigefügten Anspruchs 1.

Wellgetriebe sind aus dem Stand der Technik bekannt, hierzu sei beispielsweise auf die DE 102 22 695 A1 verwiesen. Wellgetriebe beinhalten normalerweise einen zylindrischen starren Ring mit einer Innenverzahnung bzw. alternativ auch zwei zylindrische starre Ringe mit einer Innenverzahnung, ein flexibles außen verzahntes Zahnrad, das im Inneren des starren Hohlrads angeordnet ist, sowie einen Wellgenerator, der in das Innere des flexiblen Zahnrads eingepasst ist. Der Wellgenerator ist gebildet aus einem starren Wellgetriebeeinsatz mit elliptischem Umriss sowie einem Wellgetriebelager, dass auf eine Außenumfangsfläche des Wellgetriebeeinsatzes gepasst ist, so dass das flexible Zahnrad in eine elliptische Form gebogen wird und die Außenverzahnung desselben, die an beiden Enden der Hauptachse der Ellipsenform angeordnet ist, mit der Innenverzahnung des starren Zahnrads kämmt, Wenn der Wellgenerator durch einen Motor oder dergleichen rotiert wird, bewegen sich die miteinander in Eingriff stehenden Teile der beiden Zahnräder in Umfangsrichtung. Da eine Differenz in der Anzahl von Zähnen zwischen dem Außenzahnrad und dem Innenzahnrad vorhanden ist, entsteht eine relative Rotation zwischen den Zahnrädern gemäß der Differenz in der Anzahl von Zähnen, Typischerweise beträgt die Differenz in der Anzahl von Zähnen zwei.

Wellgetriebe werden nach ihrer Bauweise in Topfgetriebe und Hülsengetriebe bzw, Flachgetriebe unterteilt. Beim Topfgetriebe ist das flexible Zahnrad in Topfform ausgeführt, dessen Boden an die Abtriebswelle angeflanscht ist. Das Übersetzungshohlrad wird als Flansch zur Anbindung an die Peripherie genutzt.

Beim Hülsengetriebe ist das flexible Zahnrad in Ringform ausgeführt. Es kommen zwei Hohlräder zum Einsatz, ein Übersetzungs- und ein Kupplungszahnrad, wobei das Kupplungszahnrad die identische Zähnezahl des flexiblen Zahnrads besitzt und das Übersetzungszahnrad mehr Zähne als das flexible Zahnrad aufweist. Bei schneller Drehung des Wellgenerators mit geringem Drehmoment entsteht eine Relativdrehung der beiden Hohlräder, Zwischen den Hohlrädern können die untersetzte Drehzahl und das hohe Drehmoment abgegriffen werden. Das Flachgetriebe wird häufig bei Nockenwellenantrieben eingesetzt.

Wellgetriebe können als elektromechanische Phasenversteller bzw. Nockenwellenversteller bei 3-Wellensystemen eingesetzt werden. Dem Wellensystem wird über die Antriebswelle, z.B. Nockenwellen-Kettenrad, die Antriebsleistung zugeführt, welche über die Abtriebswelle, z.B. Nockenwelle, wieder abgegeben wird. Der als Stellglied dienende Phasensteller ist dabei als Bindeglied zwischen der Antriebswelle und der zu treibenden Welle im Leistungsfluss angeordnet. Dies erlaubt Ober eine dritte Welle, die Verstellwelle, überlagert zur Antriebsleistung zusätzlich mechanische Leistung in das Wellensystem einzukoppeln oder aus diesem abzuführen. Dadurch kann die von der Antriebswelle vorgegebene Bewegungsfunktion zur Abtriebswelle verändert werden, z.B. kann ein Phasenversatz realisiert werden. Als Aktuatoren in solchen Dreiwellensystemen kommen häufig Elektromotoren zur Verstellung der Verstellwelle zum Einsatz, Es ist aber ebenso möglich, elektrische, mechanische oder hydraulische Bremsen, rotatorisch oder linear wirkende Elektromagnete, Magnetventile oder Linearmotoren bzw. -aktuatoren zu verwenden, um die Phasenverstellung zu ermöglichen.

Um die Peripherie bei Steuerungsfehlern der Aktuatorik vor unerwünschten Kollisionen von Bauteilen zu schützen, wird der Verstellbereich bzw. Antriebsbereich in der Regel durch die Begrenzung des Drehwinkels einer der drei Wellen relativ zu einer zweiten Welle bzw. relativ zum Gehäuse eingeschränkt, Dazu wird ein mechanischer Anschlag als integraler Bestandteil der Vorrichtung verwendet. Der Anschlag kann zwischen Antriebs- und Abtriebswelle, zwischen Antriebs- und Verstellwelle oder zwischen Abtriebs- und Verstellwelle angeordnet sein. Der Anschlag ist im bekannten Stand der Technik in der Regel zwischen Abtriebswelle und Antriebseinheit realisiert. Die Begrenzung des Abtriebswinkels erfolgt im Stand der Technik immer nur einfach zwischen zwei Getriebewellen, nie zweifach, also zwischen Abtrieb und Antrieb sowie zwischen Verstellwelle und Antrieb bzw. zwischen Verstellwelle und Abtrieb.

Des Weiteren können Wellgetriebe auch In 2-Wellen-Anordnungen eines 3-Wellengetriebes in Verstellantrieben eingesetzt werden. Hier werden sie vorrangig als Untersetzungsvorrichtungen für Stellantriebe im Automotivebereich sowie in Industrieanwendungen verwendet. Untersetzungsvorrichtungen dienen dazu, eine mit hoher Geschwindigkeit und niedriger Last eingespeiste Antriebsleistung eines Stellers in eine Abtriebsleistung mit geringer Geschwindigkeit und hoher Last zu wandeln. Es wird nur Leistung zwischen Verstellwelle und Abtriebswelle übertragen. Die dritte Welle des Getriebes ist gehäusefest. Der Winkel der Abtriebswelle kann dabei mehr als 360° betragen.

Um bei Steuerungsfehlern der Aktuatorik die Peripherie vor Kollisionen von Bauteilen zu schützen, kann wiederum der Abtriebsdrehwinkel durch eine mechanische Begrenzung eingeschränkt werden. Der Anschlag kann hierbei zwischen Verstell- und Abtriebswelle, zwischen Abtriebswelle und Gehäuse oder zwischen Verstell- bzw. Antriebswelle und Gehäuse ausgebildet sein. Der Anschlag ist üblicherweise zwischen Abtriebswelle und Gehäuse realisiert. Es können auch ausschließlich oder zusätzlich steuerungsseitige Begrenzungen des Verstellweges vorgenommen werden. Hierbei wird der Weg der Abtriebswelle primär durch den von der Steuerung definierten Stellweg der Antriebs- bzw. Verstellwelle vorgegeben. Der Anschlag dient dann lediglich zur Absicherung von Fail-Safe-Zuständen.

Wie eben beschrieben, erfolgt die Verstellbereichsbegrenzung meist zwischen An- und Abtriebswelle bzw. zwischen Abtriebswelle und dem Gehäuse der Vorrichtung. Die nicht unmittelbar im Verstellwinkel bzw. Antriebswinkel begrenzte Verstellwelle wird über die Getriebekinematik und die Steifigkeit der Getriebeglieder abgebremst, sobald die Abtriebsseite die Grenze des Drehwinkels erreicht. Im Stand der Technik sind keine Maßnahmen definiert, die beim Erreichen des Anschlages im Stellglied auftretende Impulsiasten in der Wirkung dampfen, In Folge hoher Lasten können sich Getriebeglieder so stark verformen, dass sie untereinander kollidieren und das Stellglied zum Verklemmen bringen. Ferner können Getriebeteile frühzeitig ermüden bzw. müssen für den Normalbetrieb überdimensioniert werden, um auch die hohen Lasten im ungebremsten Anschlag zu ertragen. Dieser Zustand kann auch auftreten, wenn außerhalb eines evtl. vorhandenen Anschlages der Steller abrupt durch die Steuerung oder aufgrund einer Kollision (Anschlag außerhalb des Systems) abgebremst wird.

Wie bereits beschrieben, basiert das Prinzip des Wellgetriebes auf einem dünnwandigen flexiblen Stirnrad, welches durch den Wellgenerator umlaufend ovalisiert werden kann. Diese Flexibilität des Stirnrades führt aber auch dazu, dass es unter Last sowohl radial als auch axial und tangential Im Zahnkontakt ausweichen kann. Sobald die Verformung bzw. Verlagerung des Stirnrades von der Getriebekinematik abweicht, können Eingriffsstörungen und Kollisionen zwischen den Getriebeteilen und Verzahnungen auftreten. Mit den bislang beim Wellgenerator üblicherweise verwendeten einreihigen Lagern kann ein radiales Ausweichen unter Last nicht verhindert werden, da der Außenring beim Einlaufen einer Wälzkörperlücke In die Lastzone nachgibt. Analog dem Außenring verformt sich auch das flexible Stirnrad. Daraus ergibt sich eine ungünstigere Pressungsverteilung im Zahnkontakt. Bei axial unsymmetrischem Lasteintrag kann das Stirnrad dadurch am Umfang stärker zwischen den belasteten und unbelasteten Sektoren verdrillt werden. Außerdem kann wegen der unzureichenden Abstützung in der Verzahnung das Wellgetriebe eher überlastet werden, wodurch es zum Klemmen bzw. Überschnappen kommen kann.

Bekannt sind Wellgetriebe beispielsweise aus EP 0 161 368 A1, US 3 001 840 A und WO 95/00748 A1.

Die Aufgabe der vorliegenden Erfindung besteht somlt darin, ein verbessertes Wellgetriebe zur Verfügung zu stellen, mit welchem die unter Last auftretenden radialen Abweichungen im Zahnkontakt verhindert bzw. minimiert werden, wodurch die Getriebetelle vor Überlasten besser geschützt werden und ein Klemmen bzw. eine Beschädigung der Getriebeteile weitestgehend verhindert werden. Hierdurch soll gleichzeitig auch eine bessere Ertragbarkeit der Impulsiast beim Auftreffen im Endanschlag erreicht werden.

Zur Lösung der erfindungsgemäßen Aufgabe dient ein Wellgetriebe gemäß dem beigefügten Anspruch 1. Das erfindungsgemäße Wellgetriebe zeichnet sich dadurch aus, dass zwischen dem Außenring und dem Innenring des Wellgenerators zwei Reihen von Wälzkörpern angeordnet sind und dass die Walzkörper in axialer Richtung elnander überlappen, Die zwei Wälzkörperreihen sind hierbei vorzugsweise axial 1% bis 99% ihres Kugeldurchmessers überlappend angeordnet. Daraus resultiert eine über den Umfang nahezu homogene Steifigkeitsverteilung. Die Kugellücken der einen Kugelreihe werden durch die Kugeln der zweiten Reihe je nach Überlappung teilweise ausgefüllt. Damit wird der Außenring Im Bereich der Kugellücken gestützt, so dass sich eine geringere Durchbiegung ergibt.

Ein wesentlicher Vorteil des erfindungsgemäßen Wellgetriebes besteht darin, dass sich durch die Verwendung eines zweireihigen Lagers die Steifigkeit erhöht. Bei zweireihigen Lagern Ist das flexible Stirnrad besser abgestützt als bei den bislang verwendeten einreihigen Lagern. Mit einem zweireihigen Lager ist die Verformung beim Einlaufen einer Watzkörperlücke in die Lastzone geringer, wodurch die Verzahnung besser abgestützt ist und das Getriebe weniger belastet wird. Hierdurch kann ein Verklemmen und eine dadurch hervorgerufene Beschädigung von Getriebeteilen weitestgehend verhindert werden,

Nach einer vorteilhaften Ausführungsform werden als Wälzkörper Nadeln oder Rollen eingesetzt. Nadeln oder Rollen sorgen für eine besonders gute Abstützung der Verzahnung, wodurch eine weitere Verbesserung im Sinne des Überlastschutzes des Wellgetriebes erreicht wird. Natürlich können auch Kugeln als Wälzkörper eingesetzt werden.

Nach einer vorteilhaften Ausführungsform sind die Wälzkörper in einem Wälzkörperkäfig angeordnet, Durch eine entsprechende Ausgestaltung des Wälzkörperkäfigs, beispielswelse als Schnappkäfig, soll ein Kontakt der Wälzkörper untereinander vermieden werden. Hierdurch werden u. a. Reibungsverluste vermieden. Bei einer weiteren günstigen Ausführungsform wird eine ungerade Anzahl von Wälzkörpern verwendet. Hierdurch kann ein durch die Drehung der Verstellwelle hervorgerufener Steifigkeitssprung reduziert werden. Bei gerader Wälzkörperanzahl ist die Verzahnung radial entweder durch beide gegenüberliegende Wälzkörper sehr steif abgestützt, nach einer Drehung der Verstellwelle um ½ Kugelteilung Ist die Verzahnung dagegen nur noch durch beide Lücken radial weich abgestützt.

Von Vorteil Ist es, ein Wälzlager mit einem reduzierten Wälzkörperabstand, bei dem eine höhere Wälzkörperanzahl bei kleinerer Wälzkörpergröße verwendet wird, einzusetzen. Hierbei hat sich eine Wälzkörperanzahl von >=17 als zweckmäßig erwiesen. Besonders bevorzugte Ausführungen verwenden >=21 Wälzkörper. Durch die Verwendung vieler, kleiner Wälzkörper kann eine besonders gute Abstützung erreicht werden, da die Lücken zwischen den einzelnen Wälzkörpern minimiert werden.

Weiterhin ist es vorteilhaft, wenn die elastische radiale Durchbiegung von Stirnrad und Außenring zwischen zwei Wälzkörpern maximal $0,3 \times m$ beträgt, wobei

m für das Normalmodul der Verzahnung steht. Dadurch kann eine insgesamt gute Abstützung, auch in den Lücken zwischen den einzelnen Wälzkörpern, gewährleistet werden. Dieser Ansatz soll für die radiale Steifigkeit über den Umfang und über die Breite des Lagers gelten. Hierbei ist die elastische Durchbiegung definiert als

$$w_{ges}=F_r/c_{ges}$$

mit

$F_r$ -    maximale Radiallast aus der Verzahnung, angenommen als Punktlast in der Mitte zwischen zwei Wälzkörpern

$c_{ges}$ -    Gesamtbiegestelfe des Biegebalkens zwischen zwei Wälzkörpern, zusammengesetzt aus Steife des Außenringes und Steife des Stirnrades (Dämpfungsverluste zwischen beiden Ringen vernachlässigt)

$$c_{ges} = \frac{48}{s^3}\cdot\left(E_{AR}\cdot Iy_{AR} + E_{SR}\cdot Iy_{SR}\right)$$

mit

s -    Sehnenlänge zwischen zwei Wälzkörpern (vereinfachte Annahme als gerader Biegebalken)
$E_{AR}$ -    E-Modul Aussenring
$E_{SR}$ -    E-Modul Stirnrad
$Iy_{AR}$ -    Flächenmoment des AR um die Blegeachse (vereinfachte Annahme als Rechteckquerschnitt)
$Iy_{SR}$ -    Flächenmoment des Stirnrades um die Biegeachse (vereinfachte Annahme als Rechteckquerschnitt)

$$s = 2 \times r \times \sin(\gamma/2)$$

mit

r -    Radius des Wälzkörperteilkreises

$\gamma$ -    Wälzkörperteilungswinkel Gamma

Bei einer weiteren vorteilhaften Ausführungsform wird das Wellgetriebe als 3-Wellen-Verstellgetriebe zur Verstellung und Fixierung der Phasenlage einer Nockenwelle eines Verbrennungsmotors gegenüber einer Kurbelwelle eingesetzt. Das Wellgetriebe kann jedoch auch in Untersetzungsvorrichtungen für Stellantriebe verwendet werden.

Zur Lösung der erfindungsgemäßen Aufgabe dient auch ein in den vorliegenden Ansprüchen nicht beanspruchtes Wellgetriebe, dessen Wellgenerator statt eines Wälzlagers eine spielarme Gleitlagerung aufweist. Durch die Gleitlagerung kann ebenfalls eine gute Abstützung der Verzahnung sichergestellt werden. Hierdurch kann die mögliche Gefahr eines Verklemmens bzw. einer Beschädigung von Getriebetellen minimiert werden.

Weitere Vorteile, Einzelheiten und Welterbildungen der Erfindung ergeben sich aus der nachfolgenden Beschreibung bevorzugter Ausführungsformen, unter Bezugnahme auf die Zeichnung. Es zeigen:

Fig. 1:    einen Teilbereich eines Wellgenerators nach dem Stand der Technik;
Fig. 2:    einen Längsschnitt durch einen Wellgenerator nach dem Stand der Technik im Vergleich zu einem beim erfindungsgemäßen Wellgetriebe verwendeten Wellgenerator;
Fig. 3:    einen Längsschnitt durch einen beim erfindungsgemäßen Wellgetriebe verwendeten Wellgenerator mit zueinander versetzt angeordneten Wälzkörpern;
Fig. 4:    eine Darstellung des Steifigkeitsverlaufs der erfindungsgemäß optimierten Lösung im Vergleich zum Stand der Technik;
Fig. 5:    einen Längsschnitt durch den beim erfindungsgemäßen Wellgetriebe verwendeten Wellgenerator mit axial überlappend angeordneten Wälzkörpern.

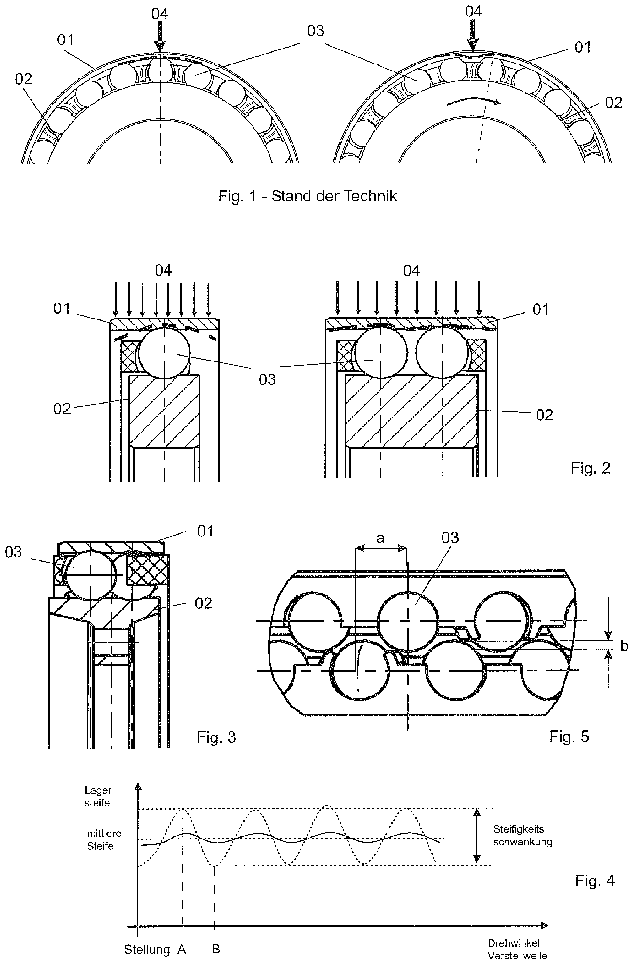

Fig. 1 zeigt einen Teilbereich eines Wellgenerators nach dem Stand der Technik. Im Stand der Technik werden beim Wellgenerator üblicherweise einreihige Wälzlager mit einem Außenring 01, einem innenring 02 und einer zwischen Außenring 01 und Innenring 02 angeordneten Reihe von Wälzkörpern 03 verwendet. Auf den Wellgenerator wirkt eine Radialkraftkomponente 04 aus der Verzahnung. In der linken Abbildung befindet sich ein Wälzkörper 03 direkt unterhalb des Zahneingriffs. Hierdurch ist eine steife radiale Abstützung eines flexiblen Stirnrads eines Wellengetriebes gewährleistet, In der rechten Abbildung ist eine zwischen zwei Wälzkörpern 03 befindliche Lücke 05 unterhalb des Zahneingriffs angeordnet. Hierdurch kann nur noch eine weiche radiale Abstützung realisiert werden. Aus der Darstellung ist ersichtlich, dass der Außenring 01 beim Einlaufen einer Lücke 05 in die Lastzone nachgibt (gestrichelte Linie). Das flexible Stirnrad verformt sich in gleicher Weise wie der Außenring 01.

Fig. 2 zeigt einen Längsschnitt durch einen Wellgenerator nach dem Stand der Technik (linke Abbildung) im Vergleich zu einem beim erfindungsgemäßen Wellgetriebe verwendeten Wellgenerator (rechte Abbildung). Dargestellt ist die radiale Abstützung über die Zahnbreite. In der Lastzone selbst ist über die Zahnbreite eine Änderung der radialen Einspannung zu beobachten. Wie links dargestellt, kann bei einem einreihigen Lager der Außenring 01 unter Wirkung der Radialkraftkomponente 04 ausweichen (gestrichelte Linie), woraus eine ungünstigere Pressungsverteilung Im Zahnkontakt folgt. Bei axial unsymmetrischem Lasteintrag kann das flexible Stirnrad dadurch am Umfang stärker zwischen den belasteten und unbelasteten Sektoren verdrillt werden. Aufgrund der schlechteren Abstützung in der Verzahnung kann das Wellgetriebe eher überlastet werden und klemmen oder überschnappen. Der rechten Abbildung kann entnommen werden, dass bei Verwendung eines zweireihigen Lagers die Verformung des Außenrings 01 (gestrichelte Linie) wesentlich geringer ist. Das flexible Stirnrad wird somit besser abgestützt, die Gefahr von Getriebeüberlastungen und damit ggf. hervorgerufenen Verklemmungen und Beschädigungen von Getriebeteilen kann deutlich verringert werden.

Fig. 3 zeigt einen Längsschnitt durch einen beim erfindungsgemäßen Wellgetriebe verwendeten Wellgenerator mit zueinander versetzt angeordneten Wälzkörpern. Bei dieser Ausführungsform ist der Zahneingriff im Wesentlichen immer durch Wälzkörper 03 direkt abgestützt. Es liegt somit stets eine steife radiale Abstützung vor.

Fig. 4 zeigt eine Darstellung des Steifigkeitsverlaufs der erfindungsgemäß optimierten Lösung im Vergleich zum Stand der Technik, Die gestrichelte Kurve stellt den Steifigkeitsverlauf der Lagerung beim Stand der Technik dar. Der durchgezogenen Kurve kann der Steifigkeitsverlauf der beim erfindungsgemäßen Wellgetriebe verwendeten Lagerung entnommen werden. Die Kurven erreichen in den Punkten A, in denen sich ein Wälzkörper in der Lastzone befindet eine Maximum und in den Punkten B in denen sich eine Wälzkörperlücke in der Lastzone befindet ein Minimum. Der Darstellung kann entnommen werden, dass eine Lagerung beim Stand der Technik (gestrichelte Kurve) größere Steifigkeitsschwankungen aufweist als die erfindungsgemäß optimierte Lösung.

Fig. 5 zeigt einen Längsschnitt durch den beim erfindungsgemäßen Wellgetriebe verwendeten Wellgenerator mit axial überlappend angeordneten Wälzkörpern. Die Kugelspuren der beiden Wälzkörperreihen weisen eine axiale Überlappung b auf. Außerdem sind die Wälzkörper 03 in Umfangsrichtung um einen Kugelversatz a zueinander versetzt angeordnet.

## Bezugzeichenliste

01    - Außenring
02    - Innenring
03    - Walzkörper
04    - Radialkraftkomponente
05    - Lücke

a    Kugelversatz in Umfangsrichtung
b    axiale Überlappung der Kugelspuren

## Patentansprüche

1. Wellgetriebe mit mindestens einem Hohlrad mit einer Innenverzahnung, einem innerhalb des Hohlrads angeordnetem, flexiblen Stirnrad mit einer Außenverzahnung und einem innerhalb des Stirnrads angeordnetem Wellgenerator zum Biegen des Stirnrads in Radialrichtung, wobei zwischen Hohlrad und Stirnrad an zwei gegenüberliegenden Stellen des Stirnrads eine drehmomentübertragende Verbindung hergestellt Ist, wobei der Wellgenerator einen Ring mit elliptischem Außenumfang und ein auf dem Außenumfang angebrachtes elliptisch verformtes Wälzlager mit einem Außenring (01), einem Innenring (02) und zwischen Außenring (01) und Innenring (02) angeordnete Wälzkörper (03) umfasst, wobei der Wellgenerator zwei Reihen von Wälzkörpern (03) umfasst, **dadurch gekennzeichnet, dass** die Wälzkörper (03) In axialer Richtung einander überlappen.

2. Wellgetriebe nach Anspruch 1, **dadurch gekennzeichnet, dass** die Wälzkörper (03) Nadeln oder Rollen sind.

3. Wellgetriebe nach einem der Ansprüche 1 bis 2, **dadurch gekennzeichnet, dass** die Wälzkörper (03) in einem Wälzkörperkäfig angeordnet sind, wobei durch die Ausgestaltung des Wälzkörperkäfigs ein Kontakt der Wälzkörper untereinander vermieden wird.

4. Wellgetriebe nach einem der Ansprüche 1 bis 3, **dadurch gekennzeichnet, dass** eine ungerade Anzahl von Wälzkörpern (03) verwendet wird.

5. Wellgetriebe nach einem der Ansprüche 1 bis 4, **dadurch gekennzeichnet, dass** die elastische radiale Durchbiegung von Stirnrad und Außenring (01) zwischen zwei Wälzkörpern (03) maximal 0,3*m betragen soll, wobei **m** das Normalmodul der Verzahnung ist.

6. Wellgetriebe nach einem der Ansprüche 1 bis 5, **dadurch gekennzeichnet, dass** es als 3-Wellen-Verstellgetriebe zur Verstellung und Fixierung der Phasenlage einer Nockenwelle eines Verbrennungsmotors gegenüber einer Kurbelwelle ausgebildet ist.

7. Wellgetriebe nach einem der Ansprüche 1 bis 6, **dadurch gekennzeichnet, dass** es als Untersetzungsvorrichtung für einen Stellantrieb ausgebildet ist.

## Claims

1. Harmonic drive having at least one internal gear with an internal toothing system, a flexible spur gear which is arranged within the internal gear and has an external toothing system, and a wave generator which is arranged within the spur gear for bending the spur gear in the radial direction, a torque-transmitting connection being produced between the internal gear and the spur gear on two opposite sites of the spur gear, the wave generator comprising a ring with an elliptical outer circumference and an elliptically deformed antifriction bearing which is attached on the outer circumference and has an outer ring (01), an inner ring (02) and rolling bodies (03) which are arranged between the outer ring (01) and the inner ring (02), the wave generator comprising two rows of rolling bodies (03), **characterized in that** the rolling bodies (03) overlap one another in the axial direction.

2. Harmonic drive according to Claim 1, **characterized in that** the rolling bodies (03) are needles or rollers.

3. Harmonic drive according to either of Claims 1 and 2, **characterized in that** the rolling bodies (03) are arranged in a rolling body cage, contact of the rolling bodies among one another being avoided by way of the configuration of the rolling body cage.

4. Harmonic drive according to one of Claims 1 to 3, **characterized in that** an odd number of rolling bodies (03) is used.

5. Harmonic drive according to one of Claims 1 to 4, **characterized in that** the elastic radial deflection of the spur gear and the outer ring (01) between two rolling bodies (03) is to be at most 0.3*m, m being the normal module of the toothing system.

6. Harmonic drive according to one of Claims 1 to 5, **characterized in that** it is configured as a triple-shaft adjusting gear mechanism for adjusting and fixing the phase position of a camshaft of an internal combustion engine with respect to a crankshaft.

7. Harmonic drive according to one of Claims 1 to 6, **characterized in that** it is configured as a step-down apparatus for an actuating drive.

## Revendications

1. Engrenage à onde de déformation comprenant au moins une couronne avec une denture intérieure, un pignon flexible disposé à l'intérieur de la couronne avec une denture extérieure et un générateur d'onde disposé à l'intérieur du pignon pour fléchir le pignon dans la direction radiale, une liaison de transfert de couple étant réalisée entre la couronne et le pignon au niveau de deux endroits opposés du pignon, le générateur d'onde comprenant une bague de périphérie extérieure elliptique et un palier à roulement déformé de manière elliptique et monté sur la périphérie extérieure avec une bague extérieure (01), une bague intérieure (02) et des corps de roulement (03) disposés entre la bague extérieure (01) et la bague intérieure (02), le générateur d'onde comprenant deux rangées de corps de roulement (03), **caractérisé en ce que** les corps de roulement (03) se chevauchent mutuellement dans la direction axiale.

2. Engrenage à onde de déformation selon la revendication 1, **caractérisé en ce que** les corps de roulement (03) sont des aiguilles ou des rouleaux.

3. Engrenage à onde de déformation selon l'une quelconque des revendications 1 à 2, **caractérisé en ce que** les corps de roulement (03) sont disposés dans une cage de corps de roulement, un contact des corps de roulement les uns avec les autres étant évité par la configuration de la cage de corps de roulement.

4. Engrenage à onde de déformation selon l'une quelconque des revendications 1 à 3, **caractérisé en ce qu'**un nombre impair de corps de roulement (03) est utilisé.

5. Engrenage à onde de déformation selon l'une quelconque des revendications 1 à 4, **caractérisé en ce que** la flexion radiale élastique du pignon et de la bague extérieure (01) entre deux corps de roulement (03) doit valoir au maximum 0,3*m, m étant le module réel de la denture.

6. Engrenage à onde de déformation selon l'une quelconque des revendications 1 à 5, **caractérisé en ce qu'**il est réalisé sous forme d'engrenage à onde de déformation à trois arbres pour le réglage et la fixation de la position de phase d'un arbre à cames d'un moteur à combustion interne par rapport à un vilebrequin.

7. Engrenage à onde de déformation selon l'une quelconque des revendications 1 à 6, **caractérisé en ce qu'**il est réalisé sous forme de dispositif réducteur pour un servomoteur.

Fig. 1 - Stand der Technik

Fig. 2

Fig. 3

Fig. 5

Fig. 4

Lager steife

mittlere Steife

Steifigkeits schwankung

Stellung A    B

Drehwinkel Verstellwelle

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10222695 A1
- EP 0161368 A1
- US 3001840 A
- WO 9500748 A1